# EUROPEAN PATENT SPECIFICATION

(11) **EP 1 992 562 B1**
(45) Date of publication and mention of the grant of the patent: **23.06.2010**
(21) Application number: 08156236.5
(22) Date of filing: 15.05.2008
(51) Int. Cl.: B65B 25/14, B65B 35/50, B65G 57/30, B65G 57/32

(54) **Unit for forming groups of products for packaging lines and related method**
Einheit zum Formieren von Produktgruppen für Verpackungslinien und entsprechendes Verfahren
Unité pour former des groupes de produits pour des lignes d'emballage et procédé correspondant

(30) Priority: 15.05.2007 IT BO20070357
(43) Date of publication of application: 19.11.2008
(73) Proprietor: Tissue Machinery Company S.p.A., 40057 Granarolo Emilia (Bologna) (IT)
(72) Inventor: Dall'Omo, Davide, 40132, BOLOGNA (IT); Gasperini, Tiziano, 40122, BOLOGNA (IT)
(74) Representative: Lanzoni, Luciano

(56) References cited:
- EP-A- 1 775 222
- WO-A-2007/088567
- US-A1- 2002 059 779

## Description

The present invention relates to a unit and a method for forming groups of products, placed on top of one another in two or more layers to form a pack, for a packaging line. In particular, it relates to a unit for feeding and forming groups of roll products, for example rolls of toilet paper and/or kitchen paper.

At present, many roll products, to which reference is made in this description by way of example and without limiting the scope of the invention, are packaged in groups of products, usually arranged in layers which are placed on top of one another.

In particular, systems for packaging such products comprise packaging lines supplied by units or machines for forming the group of products which are in turn fed by relative lines in which the individual products are arranged one after another, in a continuous row.

The forming units are therefore designed to supply the packaging machines downstream of them with rows of rolls placed alongside each other and, when required, placed on top of one another, to form the pack which is then normally enclosed in a sheet of film to produce the end pack.

The best known and most widespread multi-layer pack sizes usually comprise only two layers, the total number of products ranging from six to twelve rolls per pack, although there are bigger packs which may, for example, contain two layers of five rows of five products, totalling fifty rolls.

Said bigger packs are very bulky and difficult for the end consumer to handle. Consumers now demand items that are increasingly compact and practical to use, but which guarantee suitable autonomy between one purchase and the next.

The above-mentioned difficulty derives from the fact that the machines currently known which provide the best guarantee of output and reliability for packaging said packs are only suitable for single or double layers.

The line or machine for forming groups of products usually comprises one or more layering or supporting surfaces which feed an elevator which transfers the products, already grouped together, to the packaging line, which is normally on a level higher than the group forming line.

In the generic case of a double-layer system, the unit for forming the groups of products is usually set up in such a way that it can position two layers of products, placed one on top of another, on the elevator. Said unit can also efficiently feed a single layer of products and subsequently form a single layer on the elevator.

In such systems, for example described in US-3,455,085, the forming unit comprises a pair of supporting surfaces arranged one above the other, parallel with each other and separated by a distance substantially corresponding to the height of the layer of products conveyed on a single surface.

In particular, each surface in said pair is designed to receive a layer of products fed, one after another and alternately, by an oscillating surface which is sequentially positioned opposite the above-mentioned supporting surfaces.

The layers are fed on supporting surfaces moved by relative pusher elements which synchronise layer feed so as to keep the layers vertically aligned to ensure that both layers simultaneously enter the pack (as described in US-3,455,086) or enter the elevator, avoiding scraping between the parts in contact with one another between the products of the two different layers.

The elevator operates using a horizontal surface for receiving and transporting the products, said surface moving, vertically, between two levels: a lower level corresponding to the forming line, and an upper level corresponding to the packaging line, where the film which will intercept and wrap the products formed into a group is positioned horizontally.

Said packaging systems lack flexibility in their configuration as regards the possible combinations of layers to be formed: in other words, they cannot produce packs comprising more than two layers.

There are also prior art machines for forming groups for pack packaging machines, such as those described in patent IT - 1.328.667 by the same Applicant, in which the pack is formed directly on the elevator which is lowered when it receives each layer.

In said machine, compared with those described above, a single supporting surface is used with a relative pusher which continuously feeds the layers to the elevator one after another.

In said solution, placing a layer on the layer below which was previously placed on the elevator is quite problematic due to possible jamming in the event of scraping between products in the different layers, as revealed previously.

In an attempt to improve the performance of said machines, forming more than two layers with good production speeds, further solutions were invented (by the same Applicant) in which:
- in a first solution (Italian patent application B02004A000231) there is a first and a second feed surface for respective layers of products (fed, upstream, by a "pendulum" synchronised system), where the second surface is arranged above the first surface, parallel with it and separated from it by a distance substantially corresponding to the height of the layers so as to be able to simultaneously place the first layer and the second layer on the elevator. There is also an auxiliary surface, operating in conjunction with the elevator, to support an additional layer fed onto the second surface when the elevator is lowered and to place it on the second layer to form a third layer in the end pack;
- in a second solution EP 1.775.222discloses a unit according to the preamble of claim 1, comprising at least three surfaces for feeding layers of products towards the elevator (fed by the above-mentioned pendulum if necessary). Again, the elevator only moves between a product loading position and a product release position, to transfer the layers of products to the packaging machine. The three feed surfaces comprise synchronising means (combined with respective drive units) for simultaneously releasing the respective layers of products onto the elevator.

The latter two solutions definitely optimise and improve the forming of packs containing two or more layers, but they have a combination of highly complex structures which increase the overall cost of the machine, consequently limiting the potential market for these types of machines.

The present invention therefore has for an aim to overcome these disadvantages by providing a unit for forming multi-layer groups of products to be fed to a packaging line which, irrespective of the feed systems upstream of the elevator, allows multi-layer packs to be formed at reduced costs, with greater production flexibility, at the same time maintaining good production output rates.

The technical characteristics of the invention according to the aforementioned objects may be easily inferred from the contents of the appended claims, especially claim 1, and preferably any of the claims that depend, either directly or indirectly, on claim 1.

A preferred, non-limiting embodiment of a unit for feeding products which allows implementation of the method in accordance with the present invention is now described by way of example only.

The advantages of the invention are apparent from the detailed description which follows, with reference to the accompanying drawings which illustrate a preferred embodiment of the invention provided merely by way of example without restricting the scope of the inventive concept, and in which:
- Figure 1 is a partial schematic front view of a machine for packaging packs of roll products and a unit for forming groups of products in accordance with the present invention;
- Figure 2 is a schematic side view with some parts cut away to better illustrate others of a first operating configuration of the forming unit of Figure 1 and of product feed means;
- Figure 3 is a schematic side view with some parts cut away to better illustrate others of a second operating configuration of the forming unit of Figure 1 and of product feed means;
- Figure 4 is a schematic side view with some parts cut away to better illustrate others of a third operating configuration of the forming unit of Figure 1 and of product feed means;
- Figure 5 is a partial side view with some parts cut away to better illustrate others of a detail of means for retaining layers of products relative to the previous figures;
- Figure 6 is a top plan view with some parts cut away to better illustrate others of a detail of means for retaining layers of products relative to the previous figures;
- Figures 7 to 9 are all schematic front views with some parts cut away to better illustrate others of respective steps of a method for feeding and forming groups of products using the forming unit in accordance with the present invention;
- Figures 10 to 13 are all schematic front views with some parts cut away to better illustrate others of respective steps of a first alternative embodiment of the method for feeding and forming groups of products using the forming unit in accordance with the present invention;
- Figures 14 to 16 are all schematic front views with some parts cut away to better illustrate others of respective steps of a second alternative embodiment of the method for feeding and forming groups of products using the forming unit in accordance with the present invention;
- Figures 17 to 19 are all schematic front views with some parts cut away to better illustrate others of respective steps of a third alternative embodiment of the method for feeding and forming groups of products using the forming unit in accordance with the present invention;
- Figures 20 to 24 are all schematic front views with some parts cut away to better illustrate others of respective steps of a fourth alternative embodiment of the method for feeding and forming groups of products using the forming unit in accordance with the present invention;
- Figures 25 to 27 are all schematic front views with some parts cut away to better illustrate others of respective steps of a fifth alternative embodiment of the method for feeding and forming groups of products using the forming unit in accordance with the present invention.

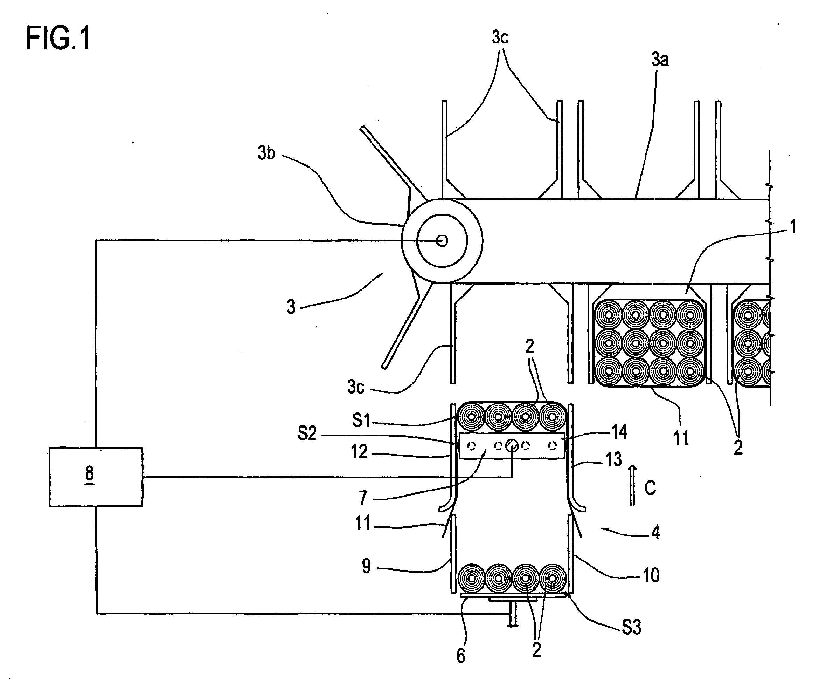

With reference to the accompanying drawings, and in particular with reference to Figures 1 to 4, the unit for forming packs 1 of products 2 disclosed is used, in particular, but without limiting the scope of the invention, for roll products 2, for example toilet and/or kitchen paper.

This unit, labelled 4 as a whole, feeds groups of products 2 to a machine 3 for packaging the groups in the packs 1 wrapped and sealed in a sheet of film.

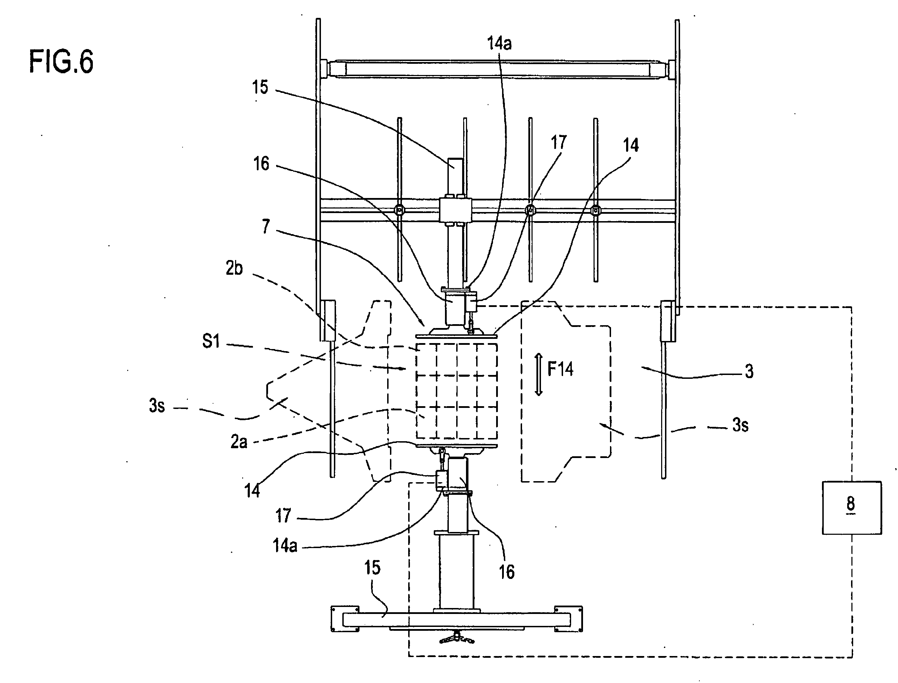

This packaging machine 3, of the known type, only partly illustrated here and not strictly part of the invention, comprises, by way of example and without limiting the scope of the invention:
- a unit or system of chains 3a, trained around gear wheels 3b, supporting pairs of teeth 3c designed to support the pack 1 of products 2 formed and fed by the unit 4 then close the bottom of it with relative rods or surfaces 3s (illustrated with a dashed line in Figure 6) and then move it towards the final packaging stations (not illustrated);
- two first vertical walls 9, 10 for lateral containment of the layers S of products 2 being fed vertically and at the upper end of which, positioned transversally, there is a sheet 11 of film for wrapping the pack 1 of products which can be intercepted by the first upper layer S1 when an elevator 6 which is part of the unit 4 passes from a lowered position to a raised position;
- a second pair of walls 12 and 13 arranged above the first pair of walls 9 and 10, again for containing, supporting and guiding the products 2 and the sheet 11 of film towards the pack 1 packaging unit 3a.

The forming unit 4 in turn comprises at least:
- means 5 for feeding layers S of products 2 in a first direction D, and towards
- the elevator 6, forming an end zone for receiving the products 2 in layers S, located downstream of the feed means 5, relative to the first direction D, and able to move vertically in both directions, at least between a lowered position in which it receives the layers S, in which it is substantially aligned with the feed means 5, and a raised position in which it releases the pack 1, consisting of at least two layers S1 and S2 placed on top of one another, to the packaging machine 3 and according to a predetermined stroke C.

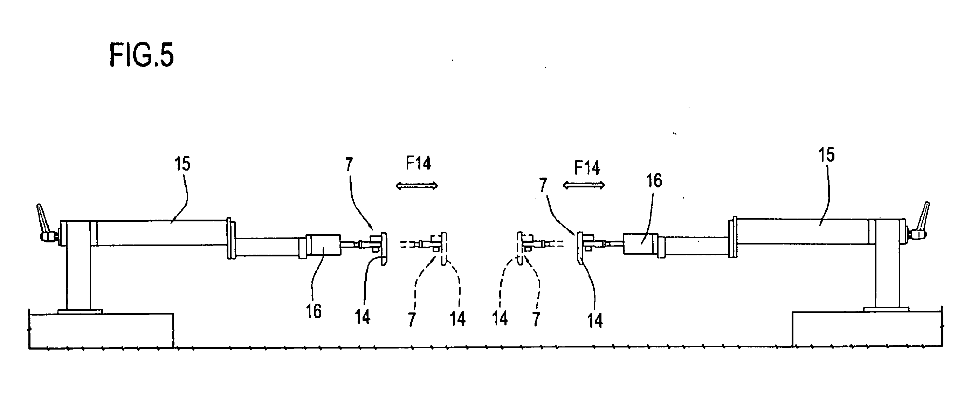

In addition, the unit 4 comprises (see also Figures 5 and 6):
- means 7 for retaining at least a first single layer S1 of products 2 at a predetermined height, acting on two sides at the ends 2a and 2b of the products 2 with reference to the first direction D of feed. These retaining means 7 are located in a zone between the elevator 6 lowered position and its raised position, thus allowing the first layer S1 of products 2 to be retained in a position in which it is standing by at a predetermined height, before the whole pack 1 is completely released into the packaging machine 3;
- control means 8 acting between the elevator 6 and the retaining means 7, allowing co-ordination between activation/deactivation of the retaining means 7 and the elevator 6 strokes C.

Specifically, as shown in the accompanying drawings, the layer S of products may consist of various combinations in terms of the number of products 2, without thereby limiting the solution disclosed. In the case illustrated, a layer S consists of four products positioned side-by-side in three rows arranged one after another (a 4x3 size).

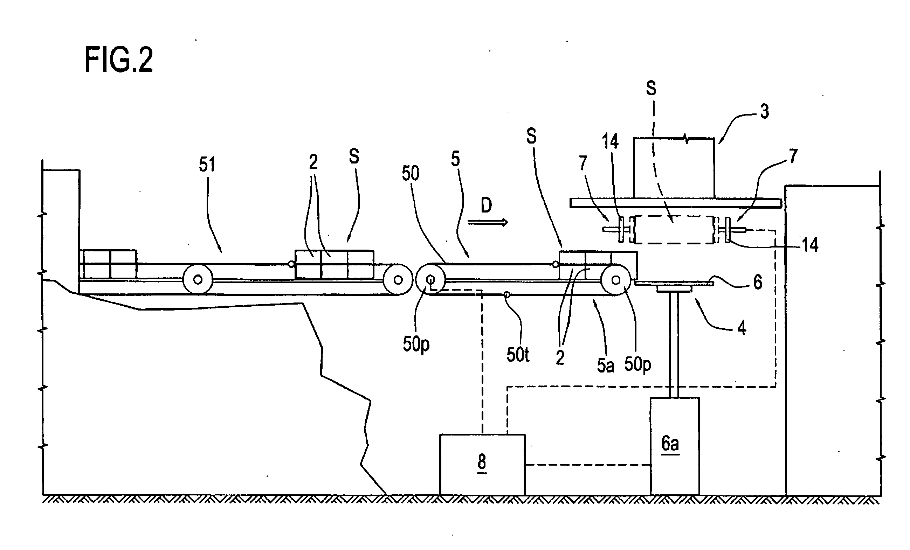

Figure 2 shows a first configuration of the feed means 5, comprising a first conveyor surface 5a for the single layers S of products 2, the surface coplanar with the elevator 6 in the lowered position, and designed to feed a single layer S of products 1 at a time onto the elevator 6, so that the elevator can perform a vertical stroke C for each layer S1.

Obviously, the surface 5a or surfaces 5a, 5b, 5c are one or more units (described in more detail below) comprising pairs of pulleys 50p around which there is trained a belt 50 supporting one or more crosspieces 50t for pushing the layers S of products sliding on a horizontal supporting surface 5.

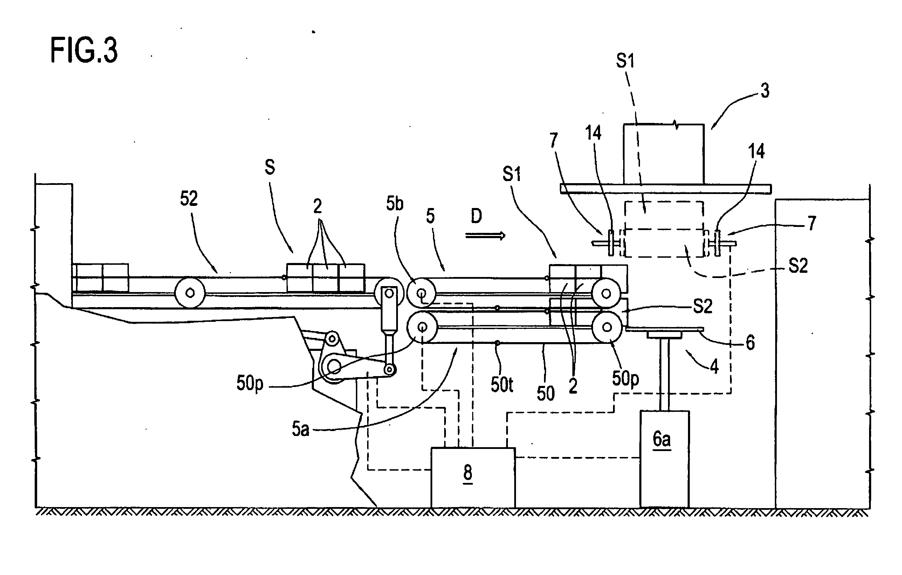

In contrast, in Figure 3 the feed means 5 comprise a first and a second conveyor surface 5a and 5b for respective layers S1 and S2 of products 2.

The first surface 5a is coplanar with the elevator 6 in the lowered position, and the second conveyor surface 5b is above the first 5a, parallel with it, and separated from it by a distance substantially corresponding to the height of the layers S of products 2, so that the first and second layers S1, S2 of products 2 are simultaneously placed on the elevator 6.

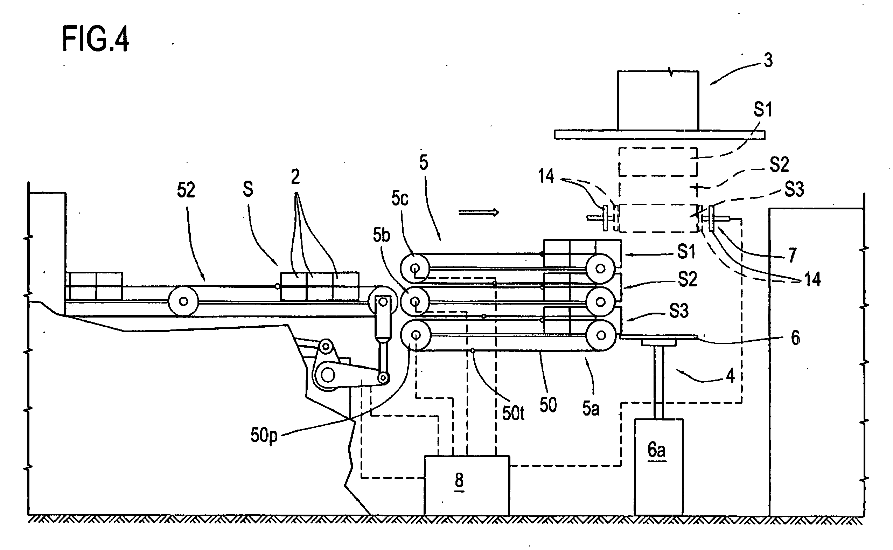

Figure 4 shows another alternative embodiment of the feed means 5, comprising a first, a second and a third conveyor surface 5a, 5b and 5c for the relative layers S1, S2, S3 of products 2.

The three surfaces 5a, 5b, 5c are above one another, parallel with each other, and separated one after another by a distance substantially corresponding to the height of the layers S1, S2, S3 of products 2, the first surface 5a being coplanar with the elevator 6 in the lowered position: the set of three surfaces 5a, 5b, 5c allows the respective three layers S1, S2, S3 of products 2 to be placed on the elevator 6.

As already indicated, the surfaces 5a, 5b, 5c may consist of conveyor belts 50 trained around motor-driven pulleys 50p and equipped with crosspieces 50t for feeding the layers S.

Similarly, upstream of the surfaces 5a, 5b, 5c, there may be stations 51 for forming the layer S and for directing the layer S towards the surfaces 5 which, depending on the number of surfaces 5 present, may be additional single fixed and coplanar surfaces 51 (Figure 2) or tilting surfaces 52 (Figures 3 and 4).

The above-mentioned control and synchronising means 8 act on the elevator 6, allowing it one or more strokes C for positioning one or more layers S1, S2, S3 of products 2 at the retaining means 7 - also according to the above-mentioned operating configurations of the feed means 5 present, and therefore the end pack 1 - alternating with successive downstrokes C and, respectively, the release of the pack 1 into the packaging machine 3, these events described in detail below.

Looking more closely at the technical details (Figures 5 and 6), the retaining means 7 are located on opposite sides of the elevator 6, more precisely, on either side of the second pair of walls 12 and 13, that is to say, opposite the anterior and posterior front space formed by the second pair of walls 12 and 13. In this way, the retaining means 7 can retain one or more layers S of products at a predetermined height after the layer S of products 2 has intercepted the film 11, but before the layer and film pass onto the pair of teeth 3c belonging to the packaging machines 3.

The retaining means 7 comprise:
- a pair of opposite horizontal walls 14 which make contact with the relative ends 2a and 2b of products 2 forming the layer S;
- a fixed frame 15 for each wall 14, at a free end having a supporting and sliding guide 16 for the relative wall 14;
- drive elements 17, inserted between each frame 15 and the relative wall 14, controlled by the control means 8, and designed to allow each wall 14 to move in a horizontal plane between a non-operating position, in which the walls 14 are distanced from each other, and an operating position, in which the walls 14 are close to each other and make contact with the ends 2a, 2b of the products 2 (see arrows F14 in Figures 5 and 6).

More precisely, the fixed frame 15 is directly connected to a machine main frame, whilst each drive element 17 may consist of a fluid driven cylinder, with one end connected to the fixed frame 15 and its rod connected to a wall 14 support 14a.

The above-mentioned control means may comprise a microprocessor unit 8 for controlling, activating and deactivating the retaining means 7, elevator 6 drive means 6a and drive units for the pulleys 50p constituting the surfaces 5a, 5b and 5c present to co-ordinate layer S feed, elevator 6 height movements and activation/deactivation of the retaining means 7.

Obviously, the dimensions of the walls 14 and their movements towards and away from each other are regulated according to the dimensions of the layers S to be handled and the type of end pack 1 to be obtained, like the above-mentioned teeth 3c for receiving the packs 1.

The unit 4 structured in this way may implement a series of methods for forming packs 1 of products 2 according to the machine configuration, starting with a first basic configuration which allows the formation of a pack 1 with two layers S1, S2 of products 2 placed one on top of the other and with a single belt 5a.

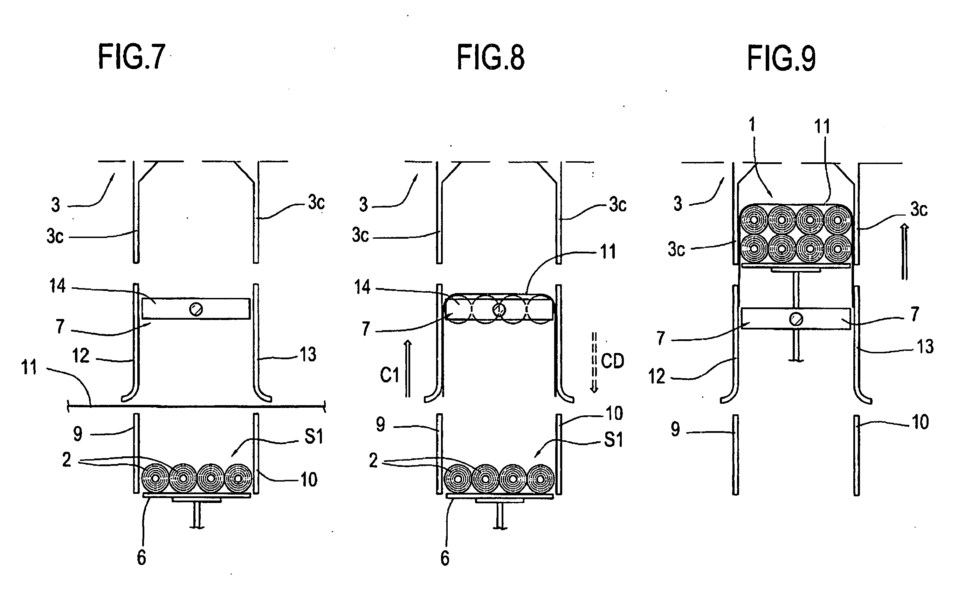

Said method (see Figures 7 to 9) comprises at least the steps of:
- placing a first layer S1 of products 2 conveyed by the first surface 5a on the elevator 6 (Figure 7);
- a first vertical lifting movement by the elevator 6 for a first partial stroke C1, and to position the first layer S1 close to the means 7 for retaining said first layer S1 at a predetermined height (Figure 8);
- retaining the first layer S1 of products 2 at a predetermined height by activating the retaining means 7, followed by an elevator 6 downstroke (arrow CD in Figure 8);
- placing a second layer S2 of products 2 conveyed by the first surface 5a on the elevator 6;
- a second lifting movement by the elevator 6 towards the first layer S1 of products 2 and relative contact, from below, between the second layer S2 and the first layer S1, with simultaneous deactivation of the retaining means 7, and
- continuation of this second lifting movement by the elevator 6 until it reaches a position where it releases the pack 1 formed in this way into the packaging machine 3 (arrow C in Figure 9).

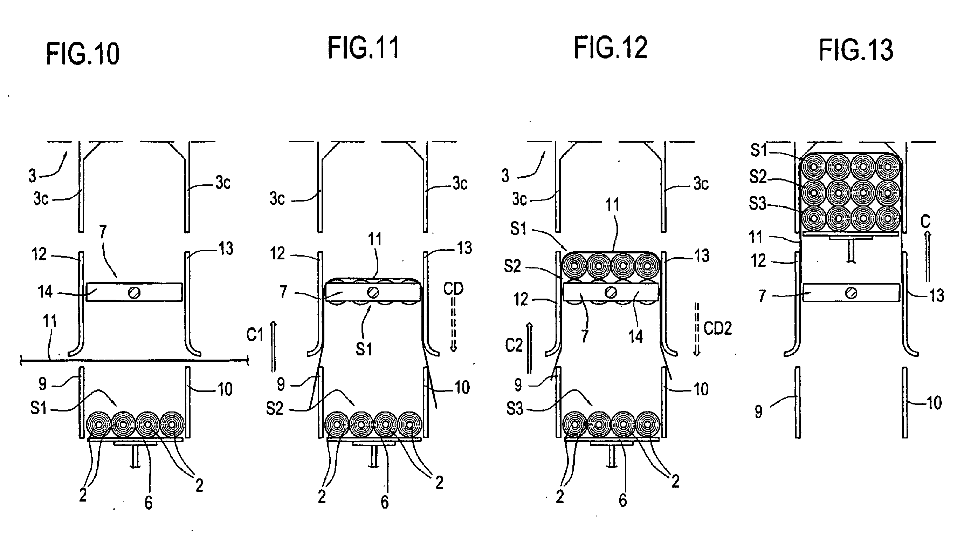

As Figures 10 to 13 clearly show, if the pack 1 to be fed to the packaging machine 3 comprises at least three layers S1, S2, S3 placed on top of one another and the feed means 5 comprise only the first conveyor surface 5a for the single layers S, after the steps of first placing of the single layer S1 (Figure 10), positioning the single layer S1 at the means 7 for retaining it at a predetermined height (Figure 11) and return stroke CD with placing of the second layer S2 of products on the elevator 6 (also Figure 11), there are the following steps:
- a second vertical lifting movement by the elevator 6 for a second partial stroke C2, and to position the second layer S2 close to the retaining means 7 (temporarily deactivated) for the second layer S2 with relative lifting of the first layer S1 and with the first layer resting on the second layer S2 (Figure 12);
- retaining the two layers S1, S2 of products 2 at a predetermined height by again activating the retaining means 7, on the second, lower layer S2, followed by an elevator 6 downstroke (arrow CD2);
- placing a third layer S3 of products 2 fed by the first conveyor surface 5a on the elevator 6 (Figure 12);
- a third lifting movement by the elevator 6 towards the two layers S1, S2 of products 2 and relative contact, from below, with the second, lower layer S2, with simultaneous deactivation of the retaining means 7, and
- continuation of the third lifting movement by the elevator 6 until it reaches a position where it releases the pack 1 formed in this way into the packaging machine 3 (Figure 13).

This method also applies in the case of a pack 1 consisting of four or more layers, obviously, each time adding another partial stroke for the penultimate layer S to be fed.

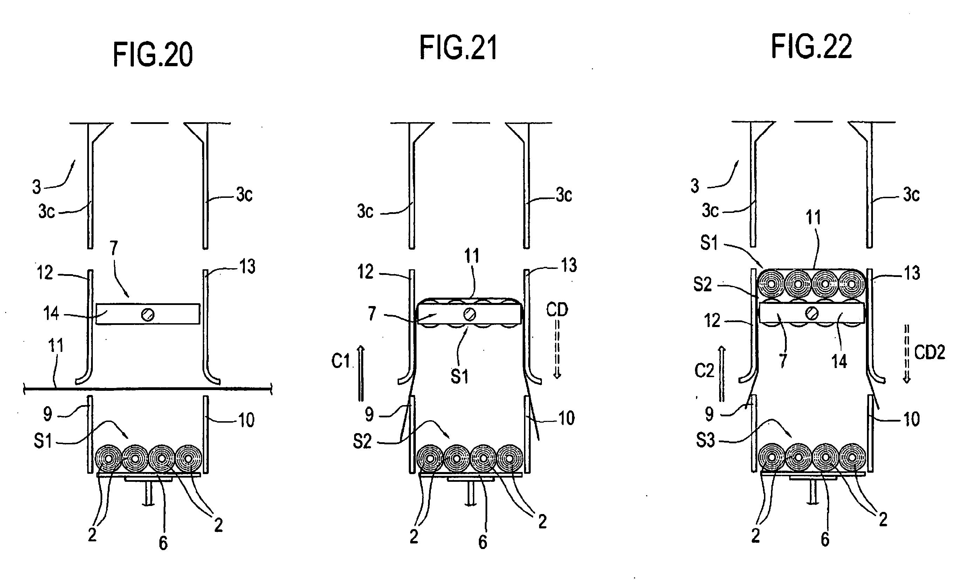

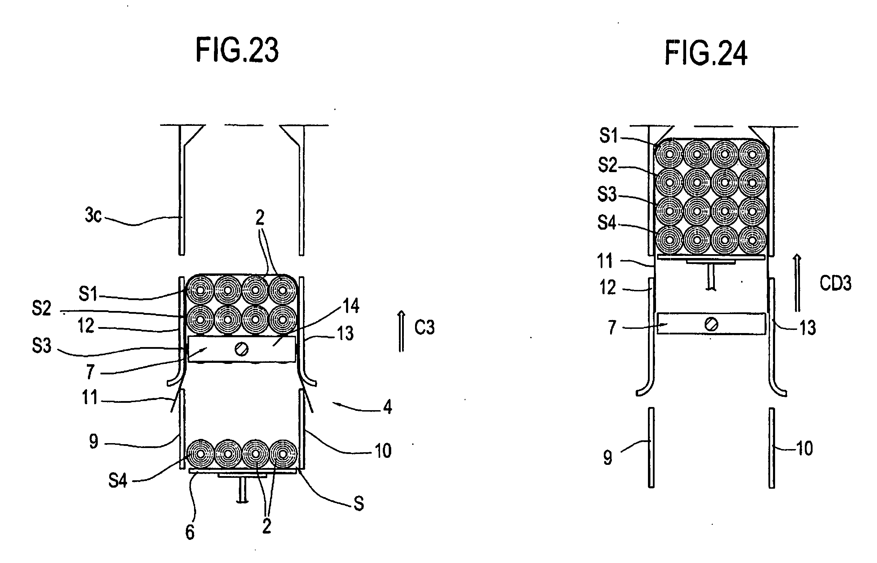

As is clearly illustrated in Figures 20 to 24, creation of a pack 1 containing four layers follows the steps indicated above, again after the steps of first placing the single layer S1 (Figure 20), of positioning the single layer S1 at the means 7 for retaining it at a predetermined height (Figure 21) and the return stroke CD with placing of the second layer S2 of products on the elevator 6 (Figure 21), with the following steps:
- a second vertical lifting movement by the elevator 6 for a second partial stroke C2, and to position the second layer S2 close to the retaining means 7 (temporarily deactivated) for the second layer S2 with relative lifting of the first layer S1 and with the first layer resting on the second layer S2 (Figure 22);
- retaining the two layers S1, S2 of products 2 at a predetermined height by again activating the retaining means 7, on the second, lower layer S2, followed by an elevator 6 downstroke (arrow CD2);
- placing a third layer S3 of products 2 fed by the first conveyor surface 5a on the elevator 6 (Figure 22);
- a third vertical lifting movement by the elevator 6, for a third partial stroke C3, towards the two layers S1, S2 of products 2 and relative contact, from below, with the second, lower layer S2, with simultaneous deactivation of the retaining means 7 (Figure 23);
- retaining the three layers S1, S2, S3 of products 2 at a predetermined height by again activating the retaining means 7, on the third, lower layer S3, followed by an elevator 6 downstroke (arrow CD3 - Figure 23);
- placing a fourth layer S4 of products 2 fed by the first conveyor surface 5a on the elevator 6 (Figure 23);
- a fourth lifting movement by the elevator 6 towards the three layers S1, S2, S3 of products 2 and relative contact, from below, with the third, lower layer S3, with simultaneous deactivation of the retaining means 7, and
- continuation of the fourth lifting movement by the elevator 6 until it reaches a position where it releases the pack 1 formed in this way into the packaging machine 3 (arrow C - Figure 24).

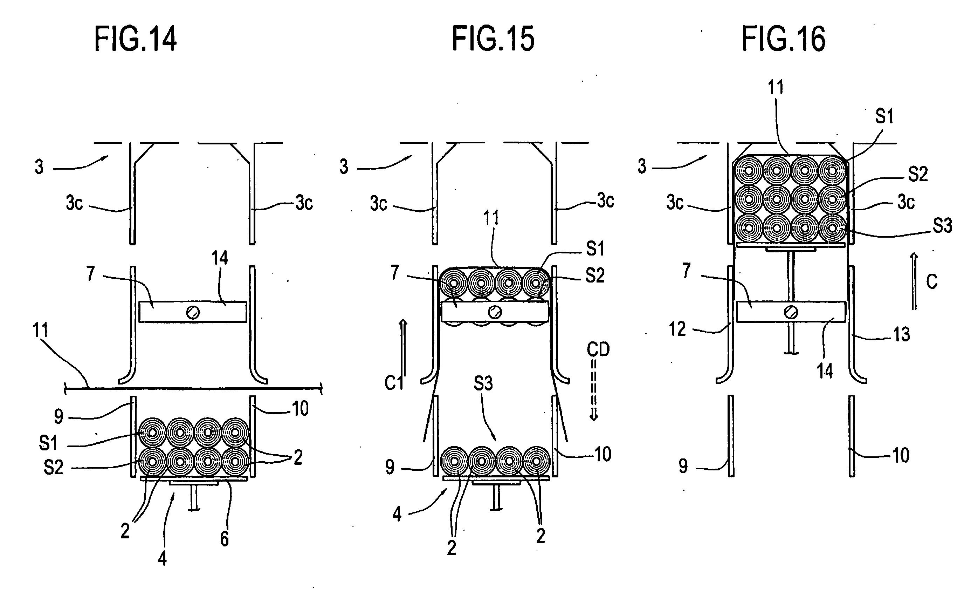

In Figures 14 to 16, in which the pack 1 to be fed comprises three layers S1, S2, S3 placed on top of one another, but the feed means 5 comprise a first and a second conveyor surface 5a and 5b for the relative single layers S, said surfaces parallel with and above each other, the method is simply changed as follows:
- during the placing step, in which two layers S1, S2 placed on top of one another are simultaneously fed onto the elevator 6 by the two conveyor surfaces 5a and 5b (Figure 14);
- a first vertical lifting movement by the elevator 6 for a first partial stroke C1, and to position the lower layer S2 of the two layers S1, S2 close to the means 7 for retaining said pair of layers S1, S2 at a predetermined height (Figure 15);
- retaining the two layers S1, S2 of products 2 at a predetermined height by activating the retaining means 7, on the second, lower layer S2, followed by an elevator 6 downstroke (arrow CD);
- placing a third layer S3 of products 2 fed by one of the two conveyor surfaces 5a or 5b on the elevator 6 (Figure 15);
- a second lifting movement by the elevator 6 towards the two layers S1, S2 of products 2 retained and relative contact, from below, with the second, lower layer S2, with simultaneous deactivation of the retaining means 7, and
- continuation of this second lifting movement by the elevator 6 until it reaches a position where it releases the pack 1 formed in this way into the packaging machine 3 (Figure 16 - arrow C).

Obviously, the step of placing the third layer S3 of products 2 on the elevator 6 may be carried out by the first, lower feed surface 5a with the elevator 6 aligned with said first surface 5a, or it may be carried out by the second, upper feed surface 5b with the elevator 6 aligned with the second surface 5b, depending on the programming choices made before the start of the production cycle: for example, if feed is from the second surface 5b, there would be a reduction in the elevator 6 return stroke.

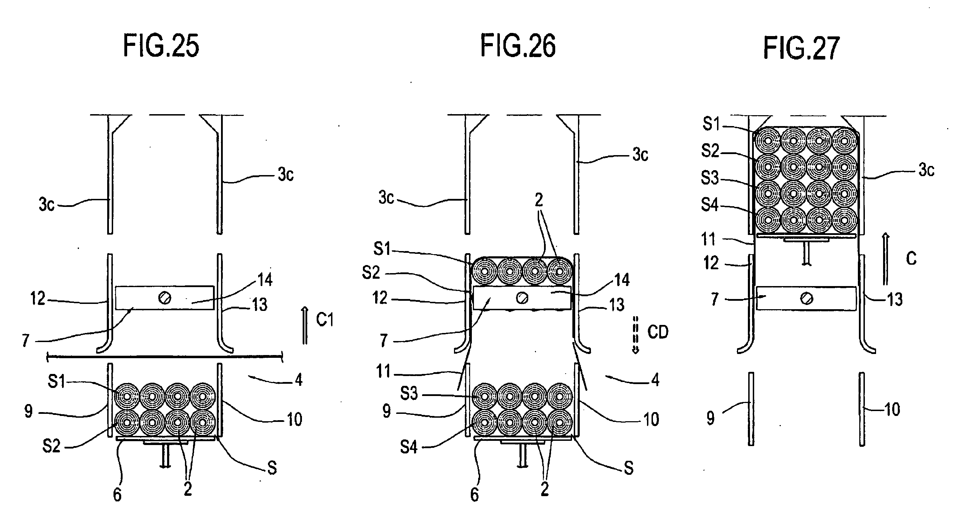

Taking advantage of the possibility of feeding the layers S of products 2 in pairs using the two surfaces 5a and 5b, it is possible to obtain a pack 1 containing four layers S1, S2, S3 and S4 in just two strokes C using the steps illustrated in Figures 25 to 27.

Basically, the method is simply changed as follows:
- during the placing step, in which two layers S1, S2 placed on top of one another are simultaneously fed onto the elevator 6 by the two conveyor surfaces 5a and 5b (Figure 25);
- a first vertical lifting movement by the elevator 6 for a first partial stroke C1, and to position the lower layer S2 of the two layers S1, S2 close to the means 7 for retaining said pair of layers S1, S2 at a predetermined height (Figure 26);
- retaining the two layers S1, S2 of products 2 at a predetermined height by activating the retaining means 7, on the second, lower layer S2, followed by an elevator 6 downstroke (arrow CD);
- placing a third and a fourth layer S3 and S4 of products 2 fed by the two conveyor surfaces 5a and 5b on the elevator 6 (Figure 26);
- a second lifting movement by the elevator 6 towards the two layers S1, S2 of products 2 retained and relative contact, from below, with the second, lower layer S2, with simultaneous deactivation of the retaining means 7, and
- continuation of this second lifting movement by the elevator 6 until it reaches a position where it releases the pack 1 formed in this way into the packaging machine 3 (Figure 27 - arrow C).

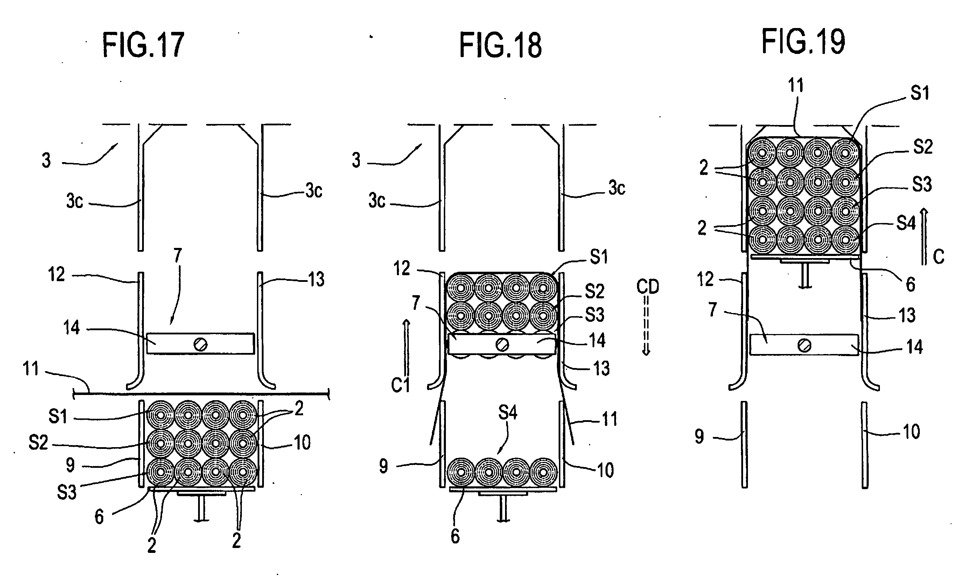

Another alternative embodiment, illustrated in Figures 17 to 19, involves forming a pack 1 again comprising at least four layers S1, S2, S3, S4 placed on top of one another, whilst the feed means 5 comprise a first, a second and a third conveyor surface 5a, 5b and 5c for the relative single layers S, said surfaces being parallel with and above each other.

In this specific case the steps would be changed as follows:
- a placing step consisting of simultaneous feeding of at least three layers S1, S2, S3 placed on top of one another onto the elevator 6 by the three conveyor surfaces 5a, 5b, 5c (Figure 17);
- a first vertical lifting movement by the elevator 6 for a first partial stroke C1, and to position the lower layer S3 of the three layers S1, S2, S3 close to the means 7 for retaining said layers at a predetermined height (Figure 18);
- retaining the three layers S1, S2, S3 of products 2 at a predetermined height by activating the retaining means 7 on the third, lower layer S3, followed by an elevator 6 downstroke;
- placing a fourth layer S4 of products 2 fed by one of the three conveyor surfaces 5a or 5b or 5c on the elevator 6 (Figure 18);
- a second lifting movement by the elevator 6 towards the three layers S1, S2, S3 of products 2 and relative contact, from below, with the third, lower layer S3, with simultaneous deactivation of the retaining means 7, and
- continuation of this second lifting movement by the elevator 6 until it reaches a position where it releases the pack 1 formed in this way into the packaging machine 3 (Figure 19 - arrow C).

Like the previous case, the step of placing the fourth layer S4 of products 2 on the elevator 6 may be carried out by the first, lower feed surface 5a with the elevator 6 aligned with said first surface 5a, or it may be carried out by the third, upper feed surface 5c with the elevator 6 aligned with the third surface 5c.

A unit structured in this way therefore achieves the preset aims, thanks to the presence of a pair of retaining walls positioned along the path for feeding the layers of products towards the packaging machine.

This simple technical addition allows the creation of any type of pack to be supplied to the packaging machine irrespective of the configuration of the feed means located upstream of the lifting device: achieved with extremely low costs and maintaining a good operating speed for the stations present.

The invention described above is susceptible of industrial application and may be modified and adapted in many ways without thereby departing from the scope of the inventive concept. Moreover, all details of the invention may be substituted by technically equivalent elements.

## Claims

1. A unit for forming packs (1) of roll products (2) for a packaging machine (3), the unit (4) being of the type comprising at least:
- means (5) for feeding layers (S) of products (2) in a first direction (D), and towards
- an elevator (6), forming an end zone for receiving the products (2) in layers (S), located downstream of the feed means (5) relative to the first direction (D), the elevator moving vertically in both directions, at least between a lowered position in which it receives the layers (S), in which it is substantially aligned with the feed means (5), and a raised position in which it releases the pack (1), consisting of at least two layers (S1, S2) placed on top of one another, to the packaging machine (3) and according to a predetermined stroke, the unit (4) being **characterised in that** it also comprises:
- means (7) for retaining at least a first single layer (S1) of products (2) at a predetermined height, acting on two sides at the ends (2a, 2b) of the products (2) relative to the first direction (D) of feed, the retaining means (7) being located in a zone between the elevator (6) lowered position and its raised position, thus allowing at least a first layer (S1) of products (2) to be retained in a stand by position at a predetermined height, before the pack (1) is completely released into the packaging machine (3);
- control means (8), being present and acting between the elevator (6) and the retaining means (7), allowing co-ordination between activation/deactivation of the retaining means (7) and the elevator (6) strokes (C).

2. The unit according to claim 1, **characterised in that** the feed means (5) comprise at least a first conveyor surface (5a) for the single layers (S) of products (2), coplanar with the elevator (6) when the latter is in its lowered position, and designed to feed a single layer (S) of products (2) at a time onto the elevator (6), allowing it to perform a corresponding vertical stroke (C) for each layer (S).

3. The unit according to claim 1, **characterised in that** the feed means (5) comprise at least a first and a second conveyor surface (5a, 5b) for the relative layers (S1, S2) of products (2); the first surface (5a) being coplanar with the elevator (6) when the latter is in its lowered position, and the second conveyor surface (5b) being positioned above the first (5a), parallel with it and separated from it by a distance substantially corresponding to the height of the layers (S) of products (2), so that the first and second layers (S1, S2) of products (2) are simultaneously placed on the elevator (6).

4. The unit according to claim 1, **characterised in that** the feed means (5) comprise at least a first and a second and a third conveyor surface (5a, 5b, 5c) for the relative layers (S1, S2, S3) of products (2); the three surfaces (5a, 5b, 5c) being above each other, parallel with each other and separated one after another by a distance substantially corresponding to the height of the layers (S1, S2, S3) of products (2), the first surface (5a) being coplanar with the elevator (6) when the latter is in its lowered position, and so that the three layers (S1, S2, S3) of products (2) can be placed on the elevator (6).

5. The unit according to any of the foregoing claims, **characterised in that** the control and synchronising means (8) act on the elevator (6) to allow the latter to perform one or more strokes (C) for positioning one or more of the layers (S1, S2, S3) of products (2) at the retaining means (7), depending on the type of feed means (5) present and the end pack (1), alternated with successive downstrokes (C) and, respectively, the release of the pack (1) into the packaging machine (3).

6. The unit according to claim 1, where the packaging machine (3) comprises at least two first vertical walls (9, 10) for lateral containment of the layers (S) of products (2), at the upper end of which, positioned transversally, there is a sheet (11) of film for wrapping the pack (1) of products which can be intercepted by the first upper layer (S1) when the elevator (6) passes from the lowered position to the raised position; said first pair of walls (9, 10) being located below a second pair of walls (12, 13) for retaining and guiding the products (2) and the sheet (11) of film towards a unit (3a) for packaging the pack (1), the unit being **characterised in that** the retaining means (7) are positioned on either side of the second pair of walls (12, 13), that is to say opposite the anterior and posterior front space formed by the second pair of walls (12, 13), so that they retain at least one layer (S1) of products at a predetermined height after said layer (S1) of products (2) has intercepted the film (11).

7. The unit according to claim 1, **characterised in that** the retaining means (7) comprise:
- a pair of opposite horizontal walls (14) which make contact with the respective ends (2a, 2b) of the products (2) forming the layer (S);
- a fixed frame (15) for each wall (14), at a free end having a supporting and sliding guide (16) for the respective wall (14);
- drive elements (17), inserted between each frame (15) and the relative wall (14), controlled by the control means (8), and designed to allow each wall (14) to move in a horizontal plane between a non-operating position, in which the walls (14) are distanced from each other, and an operating position, in which the walls (14) are close to each other and make contact with the ends (2a, 2b) of the products (2).

8. The unit according to claim 1, **characterised in that** the control means consist of a microprocessor unit (8) for controlling, activating and deactivating the retaining means (7) and the elevator (6) drive means (6a).

9. A method for forming packs (1) of products (2) to be sent to a packaging machine (3), where the packs (1) comprise at least two layers (S1, S2) of products (2) placed on top of one another, the method being **characterised in that** it comprises at least the steps of:
- placing at least a first layer (S1) of products (2) conveyed by respective feed means (5) on an elevator (6);
- a first vertical lifting movement by the elevator (6) for a first partial stroke (C1), and to position the first layer (S1) close to the means (7) for retaining said first layer (S1) at a predetermined height;
- retaining the first layer (S1) of products (2) at a predetermined height by activating the retaining means (7), followed by an elevator (6) downstroke;
- placing a second layer (S2) of products (2) conveyed by the feed means (5) on the elevator (6);
- a second lifting movement by the elevator (6) towards the first layer (S1) of products (2) and relative contact, from below, between the second layer (S2) and the first layer (S1), with simultaneous deactivation of the retaining means (7), and
- continuation of this second lifting movement by the elevator (6) until it reaches a position where it releases the pack (1) formed in this way into the packaging machine (3).

10. The method according to claim 9, where the pack (1) to be fed to the packaging machine (3) comprises at least three layers (S1, S2, S3) placed on top of one another and the feed means (5) comprise a first conveyor surface (5a) for the single layers (S), the method being **characterised in that** after the step in which the first conveyor surface (5a) places the second layer (S2) of products on the elevator (6) come the following steps:
- a second vertical lifting movement by the elevator (6) for a second partial stroke (C2), and to position the second layer (S2) close to the means (7) for retaining the second layer (S2) at a predetermined height with relative lifting of the first layer (S1) and with the first layer resting on the second layer (S2) ;
- retaining the first layer (S1) and the second layer (S2) of products (2) at a predetermined height by activating the retaining means (7) on the second, lower layer (S2), followed by an elevator (6) downstroke;
- placing a third layer (S3) of products (2) fed by the first conveyor surface (5a) on the elevator (6);
- a third lifting movement by the elevator (6) towards the two layers (S1, S2) of products (2) and relative contact, from below, with the second, lower layer (S2), with simultaneous deactivation of the retaining means (7), and
- continuation of this third lifting movement by the elevator (6) until it reaches a position where it releases the pack (1) formed in this way into the packaging machine (3).

11. The method according to claim 9, where the pack (1) to be fed comprises at least three layers (S1, S2, S3) placed on top of one another and the feed means (5) comprise a first and a second conveyor surface (5a, 5b) for the relative single layers (S), parallel with and above each other, the method being **characterised in that** it comprises:
- a placing step consisting of simultaneous feeding by the first and second conveyor surfaces (5a, 5b) of at least two layers (S1, S2) placed on top of one another onto the elevator (6);
- a first vertical lifting movement by the elevator (6) for a first partial stroke (C1), and to position the lower layer (S2) of these two layers (S1, S2) close to the means (7) for retaining the pair of layers (S1, S2) at a predetermined height;
- retaining the first layer (S1) and the second layer (S2) of products (2) at a predetermined height by activating the retaining means (7) on the second, lower layer (S2), followed by an elevator (6) downstroke;
- placing a third layer (S3) of products (2) fed by the first conveyor surface (5a) or the second conveyor surface (5b) on the elevator (6);
- a second lifting movement by the elevator (6) towards the two layers (S1, S2) of products (2) and relative contact, from below, with the second, lower layer (S2), with simultaneous deactivation of the retaining means (7), and
- continuation of this second lifting movement by the elevator (6) until it reaches a position where it releases the pack (1) formed in this way into the packaging machine (3).

12. The method according to claim 9, where the pack (1) to be fed comprises at least four layers (S1, S2, S3, S4) placed on top of one another and the feed means (5) comprise a first and a second and a third conveyor surface (5a, 5b, 5c) for the relative single layers (S), parallel with and above each other, the method being **characterised in that** it comprises:
- a placing step consisting of simultaneous feeding by the first, the second and the third conveyor surfaces (5a, 5b, 5c) of at least three layers (S1, S2, S3) placed on top of one another onto the elevator (6);
- a first vertical lifting movement by the elevator (6) for a first partial stroke (C1), and to position the lower layer (S3) of these three layers (S1, S2, S3) close to the means (7) for retaining said layers (S1, S2, S3) at a predetermined height;
- retaining the first layer (S1) and the second layer (S2) and the third layer (S3) of products at a predetermined height by activating the retaining means (7) on the third, lower layer (S3), followed by an elevator (6) downstroke;
- placing a fourth layer (S4) of products (2) fed by the one of the first, second or third conveyor surfaces (5a, 5b, 5c) on the elevator (6);
- a second lifting movement by the elevator (6) towards the three layers (S1, S2, S3) of products and relative contact, from below, with the third, lower layer (S3), with simultaneous deactivation of the retaining means (7), and
- continuation of this second lifting movement by the elevator (6) until it reaches a position where it releases the pack (1) formed in this way into the packaging machine (3).

13. The method according to claim 11, **characterised in that** the step of placing the third layer (S3) of products (2) on the elevator (6) is carried out by the first, lower feed surface (5a) with the elevator (6) aligned with said first surface (5a).

14. The method according to claim 11, **characterised in that** the step of placing the third layer (S3) of products (2) on the elevator (6) is carried out by the second, upper feed surface (5b) with the elevator (6) aligned with said second surface (5b).

15. The method according to claim 12, **characterised in that** the step of placing the fourth layer (S4) of products (2) on the elevator (6) is carried out by the first, lower feed surface (5a) with the elevator (6) aligned with said first surface (5a).

16. The method according to claim 12, **characterised in that** the step of placing the fourth layer (S4) of products (2) on the elevator (6) is carried out by the third, upper feed surface (5c) with the elevator (6) aligned with said third surface (5c).

## Patentansprüche

1. Einheit zum Formieren von Packungen (1) von Rollenprodukten (2) für eine Verpackungsmaschine (3), wobei die Einheit (4) der Art ist, die zumindest Folgendes beinhaltet:
- Mittel (5) für das Zuführen von Lagen (S) von Produkten (2) in einer ersten Richtung (D) und hin zu
- einem Elevator (6), der einen Endbereich zur Aufnahme der Produkte (2) in Lagen (S) bildet, der bezogen auf die erste Richtung (D) stromabwärts nach den Zuführmitteln (5) angeordnet ist, wobei der Elevator vertikal in beiden Richtungen zumindest beweglich ist zwischen einer abgesenkten Stellung zur Aufnahme der Lagen (S), in der er im Wesentlichen mit den Zuführmittel (5) ausgerichtet ist, und einer angehobenen Stellung zur Ausgabe der Packung (1), die aus zumindest zwei übereinander liegenden Lagen (S1, S2) besteht, an die Verpackungsmaschine (3) und entsprechend eines vorbestimmten Bewegungshubes, wobei die Einheit (4) **dadurch gekennzeichnet ist, dass** sie ferner beinhaltet:
- Mittel (7) zum Halten zumindest einer ersten einzelnen Lage (S1) von Produkten (2) auf einer vorbestimmten Höhe, die beidseitig an den Enden (2a, 2b) der Produkte (2) bezogen auf die erste Zuführrichtung (D) wirken, wobei die Haltemittel (7) in einem Bereich zwischen der abgesenkten Stellung des Elevators (6) und dessen angehobener Stellung angeordnet sind, um es zu ermöglichen, dass zumindest eine erste Lage (S1) von Produkten (2) in einer Bereitschaftsstellung auf einer vorbestimmten Höhe gehalten wird, bevor die Packung (1) vollständig in die Verpackungsmaschine (3) ausgegeben wird;
- Steuereinrichtungen (8), die zwischen dem Elevator (6) und den Haltemitteln (7) angeordnet sind und so wirken, dass sie die Koordination zwischen der Aktivierung/Deaktivierung der Haltemittel (7) und der Bewegungshübe (C) des Elevators (6) ermöglichen.

2. Einheit nach Anspruch 1, **dadurch gekennzeichnet, dass** die Zuführmittel (5) zumindest eine erste Förderoberfläche (5a) für die einzelnen Lagen (S) von Produkten (2) beinhalten, die komplanar mit dem Elevator (6) ausgerichtet ist, wenn sich dieser in seiner abgesenkten Stellung befindet, und dafür ausgelegt ist, jeweils eine einzelne Lage (S) von Produkten (2) dem Elevator (6) zuzuführen, um ihm die Ausführung eines entsprechenden vertikalen Bewegungshubes (C) für jede Lage (S) zu ermöglichen.

3. Einheit nach Anspruch 1, **dadurch gekennzeichnet, dass** die Zuführmittel (5) zumindest eine erste und eine zweite Förderoberfläche (5a, 5b) für die entsprechenden Lagen (S1, S2) von Produkten (2) beinhalten; wobei die erste Oberfläche (5a) komplanar mit dem Elevator (6) ausgerichtet ist, wenn sich dieser in seiner abgesenkten Stellung befindet, und die zweite Förderoberfläche (5b) über der ersten (5a) angeordnet ist, parallel zu dieser und in einem Abstand zu dieser, der im Wesentlichen der Höhe der Lagen (S) von Produkten (2) entspricht, so dass die erste und die zweite Lage (S1, S2) von Produkten (2) gleichzeitig auf dem Elevator (6) abgelegt werden.

4. Einheit nach Anspruch 1, **dadurch gekennzeichnet, dass** die Zuführmittel (5) zumindest eine erste und eine zweite und eine dritte Förderoberfläche (5a, 5b, 5c) für die entsprechenden Lagen (S1, S2, S3) von Produkten (2) beinhalten; wobei die drei Oberflächen (5a, 5b, 5c) übereinander angeordnet sind, und zwar parallel zueinander und jeweils in einem Abstand voneinander, der im Wesentlichen der Höhe der Lagen (S1, S2, S3) von Produkten (2) entspricht, wobei die erste Fläche (5a) komplanar mit dem Elevator (6) ausgerichtet ist, wenn sich dieser in seiner abgesenkten Stellung befindet, und derart, dass die drei Lagen (S1, S2, S3) von Produkten (2) auf dem Elevator (6) abgelegt werden können.

5. Einheit nach einem der vorhergehenden Ansprüche, **dadurch gekennzeichnet, dass** die Steuer- und Synchronisiereinrichtungen (8) auf den Elevator (6) wirken, um zu ermöglichen, dass dieser einen oder mehrere Bewegungshübe (C) zum Positionieren einer oder mehrerer Lagen (S1, S2, S3) von Produkten (2) an den Haltemitteln (7) ausführt, je nach Art der vorhandenen Zuführmittel (5) und der am Ende zu erhaltenden Packung (1), abwechselnd mit anschließenden Abwärtshüben (C) und der jeweiligen Ausgabe der Packung (1) in die Verpackungsmaschine (3).

6. Einheit nach Anspruch 1, worin die Verpackungsmaschine (3) mindestens zwei vertikale Wände (9, 10) zur seitlichen Eingrenzung der Lagen (S) von Produkten (2) beinhaltet, an deren oberem Ende in Querrichtung ein Folienbogen (11) zur Umhüllung der Packung (1) von Produkten angeordnet ist, der von der ersten oberen Lage (S1) abgefangen werden kann, wenn der Elevator (6) von der abgesenkten Stellung in die angehobene Stellung übergeht; wobei das erste Paar Wände (9, 10) unterhalb eines zweiten Paares von Wänden (12, 13) angeordnet ist, das zum Halten und Führen der Produkte (2) und des Folienbogens (11) in Richtung einer Einheit (3a) zum Verpacken der Packung (1) dient, wobei die Einheit **dadurch gekennzeichnet ist, dass** die Haltemittel (7) beiderseits des zweiten Paares von Wänden (12, 13) angeordnet sind, das heißt gegenüber dem vorderen und hinteren Frontraum, der von dem zweiten Paar Wände (12, 13) gebildet wird, so dass sie zumindest eine Lage (S1) von Produkten auf einer vorbestimmten Höhe halten, nachdem die Lage (S1) von Produkten (2) die Folie (11) abgefangen hat.

7. Einheit nach Anspruch 1, **dadurch gekennzeichnet, dass** die Haltemittel (7) beinhalten:
- ein Paar einander gegenüberliegender horizontaler Wände (14), die in Berührung mit den entsprechenden Enden (2a, 2b) der Produkte (2) treten, aus denen die Lage (S) gebildet wird;
- einen feststehenden Rahmen (15) für jede Wand (14), der an einem freien Ende eine Stütz- und Gleitführung (16) für die entsprechende Wand (14) aufweist;
- Antriebselemente (17), die zwischen jedem Rahmen (15) und der entsprechenden Wand (14) eingefügt sind, von den Steuereinrichtungen (8) gesteuert werden und dazu dienen, es jeder Wand (14) zu ermöglichen, sich auf einer horizontalen Ebene zu bewegen zwischen einer Außerbetriebsstellung, in der die Wände (14) voneinander entfernt sind, und einer Betriebsstellung, in der die Wände (14) einander angenähert sind und die Enden (2a, 2b) der Produkte (2) berühren.

8. Einheit nach Anspruch 1, **dadurch gekennzeichnet, dass** die Steuereinrichtungen aus einer Mikroprozessoreinheit (8) für die Steuerung, Aktivierung und Deaktivierung der Haltemittel (7) und der Antriebsmittel (6a) des Elevators (6) bestehen.

9. Verfahren zum Formieren von Packungen (1) von Produkten (2), die an eine Verpackungsmaschine (3) zu überführen sind, worin die Packungen (1) zumindest zwei Lagen (S1, S2) von Produkten (2) umfassen, die übereinander angeordnet sind, wobei das Verfahren **dadurch gekennzeichnet ist, dass** es zumindest folgende Schritte beinhaltet:
- Ablegen von zumindest einer ersten Lage (S1) von Produkten (2), die von entsprechenden Zuführmitteln (5) befördert wird, auf einen Elevator (6);
- erste vertikale Hubbewegung des Elevators (6) über einen ersten Teilhubweg (C1), um die erste Lage (S1) in der Nähe der Mittel (7) zum Halten der ersten Lage (S1) auf einer vorbestimmten Höhe zu positionieren;
- Halten der ersten Lage (S1) von Produkten (2) auf einer vorbestimmten Höhe durch Aktivieren der Haltemittel (7), gefolgt von einem Abwärtshub des Elevators (6);
- Ablegen einer zweiten Lage (S2) von Produkten (2), die von den Zuführmitteln (5) befördert wird, auf dem Elevator (6);
- zweite vertikale Hubbewegung des Elevators (6) zu der ersten Lage (S1) von Produkten (2) hin und entsprechende Berührung, von unterhalb, zwischen der zweiten Lage (S2) und der ersten Lage (S1) mit gleichzeitigem Deaktivieren der Haltemittel (7), und
- Fortsetzen dieser zweiten vertikalen Hubbewegung des Elevators (6), bis dieser eine Stellung erreicht, in der er die derart formierte Packung (1) in die Verpackungsmaschine (3) ausgibt.

10. Verfahren nach Anspruch 9, worin die Packung (1), die der Verpackungsmaschine (3) zuzuführen ist, zumindest drei Lagen (S1, S2, S3) umfasst, die übereinander angeordnet sind, und die Zuführmittel (5) eine erste Förderoberfläche (5a) für die einzelnen Lagen (S) beinhalten, wobei das Verfahren **dadurch gekennzeichnet ist, dass** es nach dem Schritt, in dem die erste Förderoberfläche (5a) die zweite Lage (S2) von Produkten auf dem Elevator (6) ablegt, folgende Schritte beinhaltet:
- eine zweite vertikale Hubbewegung des Elevators (6) über einen zweiten Teilhubweg (C2), um die zweite Lage (S2) in der Nähe der Mittel (7) zum Halten der zweiten Lage (S2) auf einer vorbestimmten Höhe zu positionieren, mit entsprechendem Anheben der ersten Lage (S1) und Aufliegen der ersten Lage auf der zweiten Lage (S2);
- Halten der ersten Lage (S1) und der zweiten Lage (S2) von Produkten (2) auf einer vorbestimmten Höhe durch Aktivieren der Haltemittel (7) auf der zweiten, unteren Lage (S2), gefolgt von einem Abwärtshub des Elevators (6);
- Ablegen einer dritten Lage (S3) von Produkten (2), die von der ersten Förderoberfläche (5a) zugeführt wird, auf dem Elevator (6);
- dritte vertikale Hubbewegung des Elevators (6) zu den zwei Lagen (S1, S2) von Produkten (2) hin; und entsprechende Berührung, von unterhalb, mit der zweiten, unteren Lage (S2) mit gleichzeitigem Deaktivieren der Haltemittel (7), und
- Fortsetzen dieser dritten vertikalen Hubbewegung des Elevators (6), bis dieser eine Stellung erreicht, in der er die derart formierte Packung (1) in die Verpackungsmaschine (3) ausgibt.

11. Verfahren nach Anspruch 9, worin die zuzuführende Packung (1) zumindest drei übereinander liegende Lagen (S1, S2, S3) umfasst und die Zuführmittel (5) eine erste und eine zweite Förderoberfläche (5a, 5b) für die entsprechenden einzelnen Lagen (S) beinhalten, die parallel zueinander und übereinander angeordnet sind, wobei das Verfahren **dadurch gekennzeichnet ist, dass** es Folgendes beinhaltet:
- einen Ablageschritt, der darin besteht, dass durch die erste und die zweite Förderoberfläche (5a, 5b) zumindest zwei übereinander liegende Lagen (S1, S2) gleichzeitig dem Elevator (6) zugeführt werden;
- eine erste vertikale Hubbewegung des Elevators (6) über einen ersten Teilhubweg (C1), um die untere Lage (S2) dieser zwei Lagen (S1, S2) in der Nähe der Mittel (7) zum Halten des Paares von Lagen (S1, S2) auf einer vorbestimmten Höhe zu positionieren;
- Halten der ersten Lage (S1) und der zweiten Lage (S2) von Produkten (2) auf einer vorbestimmten Höhe durch Aktivieren der Haltemittel (7) auf der zweiten, unteren Lage (S2), gefolgt von einem Abwärtshub des Elevators (6);
- Ablegen einer dritten Lage (S3) von Produkten (2), die von der ersten Förderoberfläche (5a) oder der zweiten Förderoberfläche (5b) zugeführt wird, auf dem Elevator (6);
- zweite vertikale Hubbewegung des Elevators (6) zu den zwei Lagen (S1, S2) von Produkten (2) hin und entsprechende Berührung, von unterhalb, mit der zweiten, unteren Lage (S2) mit gleichzeitigem Deaktivieren der Haltemittel (7), und
- Fortsetzen dieser zweiten vertikalen Hubbewegung des Elevators (6), bis dieser eine Stellung erreicht, in der er die derart formierte Packung (1) in die Verpackungsmaschine (3) ausgibt.

12. Verfahren nach Anspruch 9, worin die zuzuführende Packung (1) zumindest vier übereinander liegende Lagen (S1, S2, S3, S4) umfasst und die Zuführmittel (5) eine erste und eine zweite und eine dritte Förderoberfläche (5a, 5b, 5c) für die entsprechenden einzelnen Lagen (S) beinhalten, die parallel zueinander und übereinander angeordnet sind, wobei das Verfahren **dadurch gekennzeichnet ist, dass** es Folgendes beinhaltet:
- einen Ablageschritt, der darin besteht, dass durch die erste, die zweite und die dritte Förderoberfläche (5a, 5b, 5c) zumindest drei übereinander liegende Lagen (S1, S2, S3) gleichzeitig dem Elevator (6) zugeführt werden;
- eine erste vertikale Hubbewegung des Elevators (6) über einen ersten Teilhubweg (C1), um die untere Lage (S3) dieser drei Lagen (S1, S2, S3) in der Nähe der Mittel (7) zum Halten der genannten Lagen (S1, S2, S3) auf einer vorbestimmten Höhe zu positionieren;
- Halten der ersten Lage (S1) und der zweiten Lage (S2) und der dritten Lage (S3) von Produkten auf einer vorbestimmten Höhe durch Aktivieren der Haltemittel (7) auf der dritten, unteren Lage (S3), gefolgt von einem Abwärtshub des Elevators (6);
- Ablegen einer vierten Lage (S4) von Produkten (2), die von einer der ersten, zweiten oder dritten Förderoberflächen (5a, 5b, 5c) zugeführt wird, auf dem Elevator (6);
- zweite vertikale Hubbewegung des Elevators (6) zu den drei Lagen (S1, S2, S3) von Produkten hin und entsprechende Berührung, von unterhalb, mit der dritten, unteren Lage (S3) mit gleichzeitigem Deaktivieren der Haltemittel (7), und
- Fortsetzen dieser zweiten vertikalen Hubbewegung des Elevators (6), bis dieser eine Stellung erreicht, in der er die derart formierte Packung (1) in die Verpackungsmaschine (3) ausgibt.

13. Verfahren nach Anspruch 11, **dadurch gekennzeichnet, dass** der Schritt des Ablegens der dritten Lage (S3) von Produkten (2) auf dem Elevator (6) durch die erste, untere Förderoberfläche (5a) ausgeführt wird, wobei der Elevator (6) mit der ersten Oberfläche (5a) ausgerichtet ist.

14. Verfahren nach Anspruch 11, **dadurch gekennzeichnet, dass** der Schritt des Ablegens der dritten Lage (S3) von Produkten (2) auf dem Elevator (6) durch die zweite, obere Förderoberfläche (5b) ausgeführt wird, wobei der Elevator (6) mit der zweiten Oberfläche (5b) ausgerichtet ist.

15. Verfahren nach Anspruch 12, **dadurch gekennzeichnet, dass** der Schritt des Ablegens der vierten Lage (S4) von Produkten (2) auf dem Elevator (6) durch die erste, untere Förderoberfläche (5a) ausgeführt wird, wobei der Elevator (6) mit der ersten Oberfläche (5a) ausgerichtet ist.

16. Verfahren nach Anspruch 12, **dadurch gekennzeichnet, dass** der Schritt des Ablegens der vierten Lage (S4) von Produkten (2) auf dem Elevator (6) durch die dritte, obere Förderoberfläche (5c) ausgeführt wird, wobei der Elevator (6) mit der dritten Oberfläche (5c) ausgerichtet ist.

## Revendications

1. Une unité pour former des paquets (1) de produits (2) en rouleaux pour une machine d'emballage (3), telle unité (4) étant du type comprenant au moins :
- des moyens (5) pour alimenter des couches (S) de produits (2) dans une première direction (D), et vers
- un élévateur (6), définissant une zone terminale de réception des produits (2) en couches (S), situé en aval des moyens d'alimentation (5) par rapport à la première direction (D), ledit élévateur étant mobile verticalement dans les deux sens au moins entre une position basse de réception des couches (S), dans laquelle il est essentiellement aligné avec les moyens d'alimentation (5), et une position haute de transfert du paquet (1), constitué d'au moins deux couches (S1, S2) superposées, à la machine d'emballage (3) et selon une course prédéfinie, l'unité (4) étant **caractérisée en ce qu'**elle comprend aussi :
- des moyens (7) pour retenir au moins une première couche (S1) unitaire de produits (2) à une hauteur prédéfinie, agissant des deux côtés au niveau des extrémités (2a, 2b) des produits (2) par rapport à la première direction (D) d'alimentation, lesdits moyens de retenue (7) étant situés dans une zone comprise entre la position basse de l'élévateur (6) et la position haute de ce dernier, de manière à pouvoir retenir au moins une première couche (S1) de produits (2) dans une position d'attente, à une hauteur prédéfinie, avant que le paquet (1) soit complètement transféré dans la machine d'emballage (3) ;
- des moyens de contrôle (8) étant prévus et agissant entre l'élévateur (6) et les moyens de retenue (7), de manière à permettre une coordination entre l'activation/désactivation des moyens de retenue (7) et les courses (C) de l'élévateur (6).

2. L'unité selon la revendication 1, **caractérisée en ce que** les moyens d'alimentation (5) comprennent au moins une première surface (5a) pour le transport des couches (S) unitaires de produits (2), coplanaire à l'élévateur (6) quand ce dernier est dans la position basse, et destinée à alimenter une couche (S) unitaire de produits (2) à la fois sur l'élévateur (6), de manière à lui permettre d'effectuer une course verticale (C) correspondante pour chaque couche (S).

3. L'unité selon la revendication 1, **caractérisée en ce que** les moyens d'alimentation (5) comprennent au moins une première et une deuxième surfaces (5a, 5b) pour le transport des couches (S1, S2) correspondantes de produits (2) ; la première surface (5a) étant coplanaire à l'élévateur (6) quand ce dernier est dans la position basse, et la deuxième surface de transport (5b) étant positionnée au-dessus de la première (5a), parallèle à et séparée de celle-ci d'une distance correspondant essentiellement à la hauteur des couches (S) de produits (2), de manière à ce que les première et deuxième couches (S1, S2) de produits (2) soient placées simultanément sur l'élévateur (6).

4. L'unité selon la revendication 1, **caractérisée en ce que** les moyens d'alimentation (5) comprennent au moins une première et une deuxième et une troisième surfaces (5a, 5b, 5c) pour le transport des couches (S1, S2, S3) correspondantes de produits (2) ; les trois surfaces (5a, 5b, 5c) étant disposées les unes au-dessus des autres, parallèles entre elles et séparées l'une après l'autre d'une distance correspondant essentiellement à la hauteur des couches (S1, S2, S3) de produits (2), la première surface (5a) étant coplanaire à l'élévateur (6) quand ce dernier est dans sa position basse, et de manière à ce que les trois couches (S1, S2, S3) de produits (2) puissent être placées sur l'élévateur (6).

5. L'unité selon l'une quelconque des revendications précédentes, **caractérisée en ce que** les moyens (8) de contrôle et de synchronisation agissent sur l'élévateur (6) pour permettre à ce dernier d'effectuer une ou plus courses (C) pour positionner une ou plusieurs des couches (S1, S2, S3) de produits (2) au niveau des moyens de retenue (7), en fonction du type des moyens d'alimentation (5) présents et du paquet (1) final, alternées à des courses (C) successives de descente et, respectivement, au transfert du paquet (1) dans la machine d'emballage (3).

6. L'unité selon la revendication 1, où la machine d'emballage (3) comprend au moins deux premières parois verticales (9, 10) de confinement latéral des couches (S) de produits (2), à l'extrémité supérieure desquelles est disposée, transversalement, une feuille (11) de film, pour l'enveloppement du paquet (1) de produits, qui peut être interceptée par la première couche (S1) supérieure quand l'élévateur (6) passe de la position basse à la position haute ; ladite première paire de parois (9, 10) étant située au-dessous d'une deuxième paire de parois (12, 13) de retenue et de guidage des produits (2) et de la feuille (11) de film vers une unité (3a) d'emballage du paquet (1), l'unité étant **caractérisée en ce que** les moyens de retenue (7) sont positionnés de chaque côté de la deuxième paire de parois (12, 13), c'est-à-dire en face de l'espace frontal avant et arrière défini par ladite deuxième paire de parois (12, 13), de manière à retenir au moins une couche (S1) de produits à une hauteur prédéfinie une fois que ladite couche (S1) de produits (2) a intercepté ledit film (11).

7. L'unité selon la revendication 1, **caractérisée en ce que** les moyens de retenue (7) comprennent :
- une paire de parois horizontales (14) opposées qui sont en contact avec les extrémités (2a, 2b) respectives des produits (2) constituant la couche (S) ;
- un châssis fixe (15) pour chaque paroi (14) ayant, à une extrémité libre, un guide (16) de support et de coulissement de la paroi (14) respective ;
- des éléments d'entraînement (17), interposés entre chaque châssis (15) et la paroi (14) correspondante, asservis aux moyens de contrôle (8), et destinés à permettre un déplacement de chaque paroi (14), dans un plan horizontal, entre une position non opérationnelle, dans laquelle les parois (14) sont éloignées les unes des autres, et une position opérationnelle, dans laquelle les parois (14) sont rapprochées entre elles et sont en contact avec les extrémités (2a, 2b) des produits (2).

8. L'unité selon la revendication 1, **caractérisée en ce que** les moyens de contrôle consistent en une unité à microprocesseur (8) servant à contrôler, activer et désactiver les moyens de retenue (7) et les moyens d'entraînement (6a) de l'élévateur (6).

9. Un procédé pour former des paquets (1) de produits (2) à envoyer à une machine d'emballage (3), où lesdits paquets (1) comprennent au moins deux couches (S1, S2) superposées de produits (2), le procédé étant **caractérisé en ce qu'**il comprend au moins les phases consistant à :
- placer au moins une première couche (S1) de produits (2), transportée par des moyens d'alimentation (5) respectifs, sur un élévateur (6) ;
- faire effectuer à l'élévateur (6) un premier mouvement vertical de montée pour une première course partielle (C1), et pour positionner la première couche (S1) à proximité des moyens (7) servant à retenir cette même première couche (S1) à une hauteur prédéfinie ;
- retenir la première couche (S1) de produits (2) à une hauteur prédéfinie en activant les moyens de retenue (7), et descente successive de l'élévateur (6) ;
- placer une deuxième couche (S2) de produits (2), transportée par les moyens d'alimentation (5), sur l'élévateur (6) ;
- faire effectuer à l'élévateur (6) un deuxième mouvement de montée vers la première couche (S1) de produits (2) et contact relatif, par en dessous, entre la deuxième couche (S2) et la première couche (S1), avec désactivation simultanée des moyens de retenue (7), et
- poursuite de ce même deuxième mouvement de montée de l'élévateur (6) jusqu'à ce que celui-ci atteigne une position de transfert du paquet (1) ainsi formé dans la machine d'emballage (3).

10. Le procédé selon la revendication 9, où le paquet (1) à alimenter à la machine d'emballage (3) comprend au moins trois couches (S1, S2, S3) superposées et les moyens d'alimentation (5) comprennent une première surface (5a) pour le transport des couches (S) unitaires, le procédé étant **caractérisé en ce que** la phase pendant laquelle la première surface de transport (5a) place la deuxième couche (S2) de produits sur l'élévateur (6) est suivie par les phases suivantes :
- faire effectuer à l'élévateur (6) un deuxième mouvement vertical de montée pour une deuxième course partielle (C2), et pour positionner la deuxième couche (S2) à proximité des moyens (7) servant à retenir cette même deuxième couche (S2) à une hauteur prédéfinie, avec montée relative de la première couche (S1) et appui de cette même première couche sur la deuxième couche (S2) ;
- retenir la première couche (S1) et la deuxième couche (S2) de produits (2) à une hauteur prédéfinie en activant les moyens de retenue (7) sur la deuxième couche (S2) inférieure, et descente successive de l'élévateur (6) ;
- placer une troisième couche (S3) de produits (2), alimentée par la première surface de transport (5a), sur l'élévateur (6) ;
- faire effectuer à l'élévateur (6) un troisième mouvement de montée vers les deux couches (S1, S2) de produits (2) et contact relatif, par en dessous, avec la deuxième couche (S2) inférieure, avec désactivation simultanée des moyens de retenue (7), et
- poursuite de ce même troisième mouvement de montée de l'élévateur (6) jusqu'à ce que celui-ci atteigne une position de transfert du paquet (1) ainsi formé dans la machine d'emballage (3).

11. Le procédé selon la revendication 9, où le paquet (1) à alimenter comprend au moins trois couches (S1, S2, S3) superposées et les moyens d'alimentation (5) comprennent une première et une deuxième surfaces (5a, 5b) pour le transport des couches (S) unitaires correspondantes, parallèles entre elles et disposées l'une au-dessus de l'autre, le procédé étant **caractérisé en ce qu'**il comprend :
- une phase de mise en place consistant à alimenter simultanément, par le biais des première et deuxième surfaces de transport (5a, 5b), au moins deux couches (S1, S2) superposées sur l'élévateur (6) ;
- un premier mouvement vertical de montée de l'élévateur (6) pour une première course partielle (C1), et pour positionner la couche (S2) inférieure desdites deux couches (S1, S2) à proximité des moyens (7) servant à retenir la paire de couches (S1, S2) à une hauteur prédéfinie ;
- retenir la première couche (S1) et la deuxième couche (S2) de produits (2) à une hauteur prédéfinie en activant les moyens de retenue (7) sur la deuxième couche (S2) inférieure, et descente successive de l'élévateur (6) ;
- placer une troisième couche (S3) de produits (2), alimentée par la première surface de transport (5a) ou la deuxième surface de transport (5b), sur l'élévateur (6) ;
- un deuxième mouvement de montée de l'élévateur (6) vers les deux couches (S1, S2) de produits (2) et contact relatif, par en dessous, avec la deuxième couche (S2) inférieure, avec désactivation simultanée des moyens de retenue (7), et
- poursuite de ce même deuxième mouvement de montée de l'élévateur (6) jusqu'à ce que celui-ci atteigne une position de transfert du paquet (1) ainsi formé dans la machine d'emballage (3).

12. Le procédé selon la revendication 9, où le paquet (1) à alimenter comprend au moins quatre couches (S1, S2, S3, S4) superposées et les moyens d'alimentation (5) comprennent une première et une deuxième et une troisième surfaces (5a, 5b, 5c) pour le transport des couches (S) unitaires correspondantes, parallèles entre elles et disposées les unes au-dessus des autres, le procédé étant **caractérisé en ce qu'**il comprend :
- une phase de mise en place consistant à alimenter simultanément, par le biais des première, deuxième et troisième surfaces de transport (5a, 5b, 5c), au moins trois couches (S1, S2, S3) superposées sur l'élévateur (6) ;
- un premier mouvement vertical de montée de l'élévateur (6) pour une première course partielle (C1), et pour positionner la couche (S3) inférieure desdites trois couches (S1, S2, S3) à proximité des moyens (7) servant à retenir lesdites couches (S1, S2, S3) à une hauteur prédéfinie ;
- retenir la première couche (S1) et la deuxième couche (S2) et la troisième couche (S3) de produits à une hauteur prédéfinie en activant les moyens de retenue (7) sur la troisième couche (S3) inférieure, et descente successive de l'élévateur (6) ;
- placer une quatrième couche (S4) de produits (2), alimentée par l'une des première, deuxième ou troisième surfaces de transport (5a, 5b, 5c), sur l'élévateur (6) ;
- un deuxième mouvement de montée de l'élévateur (6) vers les trois couches (S1, S2, S3) de produits et contact relatif, par en dessous, avec la troisième couche (S3) inférieure, avec désactivation simultanée des moyens de retenue (7), et
- poursuite de ce même deuxième mouvement de montée de l'élévateur (6) jusqu'à ce que celui-ci atteigne une position de transfert du paquet (1) ainsi formé dans la machine d'emballage (3).

13. Le procédé selon la revendication 11, **caractérisé en ce que** la phase de mise en place de la troisième couche (S3) de produits (2) sur l'élévateur (6) est effectuée par la première surface (5a) inférieure d'alimentation avec l'élévateur (6) aligné par rapport à cette même première surface (5a).

14. Le procédé selon la revendication 11, **caractérisé en ce que** la phase de mise en place de la troisième couche (S3) de produits (2) sur l'élévateur (6) est effectuée par la deuxième surface (5b) supérieure d'alimentation avec l'élévateur (6) aligné par rapport à cette même deuxième surface (5b).

15. Le procédé selon la revendication 12, **caractérisé en ce que** la phase de mise en place de la quatrième couche (S4) de produits (2) sur l'élévateur (6) est effectuée par la première surface (5a) inférieure d'alimentation avec l'élévateur (6) aligné par rapport à cette même première surface (5a).

16. Le procédé selon la revendication 12, **caractérisé en ce que** la phase de mise en place de la quatrième couche (S4) de produits (2) sur l'élévateur (6) est effectuée par la troisième surface (5c) supérieure d'alimentation avec l'élévateur (6) aligné par rapport à cette même troisième surface (5c).
